# EUROPEAN PATENT APPLICATION

(11) **EP 2 546 794 A1**
(43) Date of publication of application: **16.01.2013**
(21) Application number: 11173978.5
(22) Date of filing: 14.07.2011
(51) Int. Cl.: G06Q 30/00

(54) **System and method for providing advertising content in an electronic group conversation**

(71) Applicant: Research In Motion Limited, Waterloo, ON N2L 3W8 (CA)
(72) Inventor: Cumming, Joel George, Waterloo, Ontario N2L 3W8 (CA)
(74) Representative: Moore, Barry

(57) **Abstract**

A system and method are provided for detecting a change in membership of a group of participants in a group conversation in a messaging application to define a new group of participants. Information common to all members in the new group of participants is determined using profiles associated with each member in the new group of participants. Advertising content associated with the common information is determined and provided to each participant in the new group.

## Description

The following relates generally to providing advertising content in electronic group conversations.

Electronic communication devices typically provide the ability to communicate using various media. The connectivity provided by such media enables groups of devices to communicate with each other under a common entity designated as an electronic "group".

Group conversations can provide an opportunity to deliver advertisements and other data to the users in the electronic group. However, providing relevant and targeted advertising to users can sometimes be difficult to implement without having an adverse effect. For example, rather than stimulating the interest of the user, improperly targeted advertising can leave a negative impression with the user. This can be exacerbated with groups of users participating in a conversation, since the negative impression can not only be projected onto multiple users but can stimulate negative conversations regarding the content of the advertisements.

### GENERAL

There may be provided a method comprising: detecting a change in membership of a group of participants in a group conversation in a messaging application to define a new group of participants; determining information common to all members in the new group of participants using profiles associated with each member in the new group of participants; determining advertising content associated with the information; and providing the advertising content to the new group of participants.

There may also be provided a method of operating a mobile device, the method comprising: providing profile data to a messaging server; receiving, from the messaging server, advertising content to be displayed in a group conversation comprising a group of participants, the advertising content having been determined based on information common to all members in a new group of participants using profiles associated with each member in a new group of participants, and after detecting a change in membership of the group of participants to define the new group of participants; and displaying the advertising content in a user interface (UI) for the group conversation.

There may also be provided a computer readable storage medium comprising computer executable instructions for: detecting a change in membership of a group of participants in a group conversation in a messaging application to define a new group of participants; determining information common to all members in the new group of participants using profiles associated with each member in the new group of participants; determining advertising content associated with the information; and providing the advertising content to the new group of participants.

There may also be provided a messaging server comprising a processor and memory, the memory comprising computer executable instructions for: detecting a change in membership of a group of participants in a group conversation in a messaging application to define a new group of participants; determining information common to all members in the new group of participants using profiles associated with each member in the new group of participants; determining advertising content associated with the information; and providing the advertising content to the new group of participants.

There may also be provided a computer readable storage medium comprising computer executable instructions for operating a mobile device, the computer readable storage medium comprising instructions for: providing profile data to a messaging server; receiving, from the messaging server, advertising content to be displayed in a group conversation comprising a group of participants, the advertising content having been determined based on information common to all members in a new group of participants using profiles associated with each member in a new group of participants, and after detecting a change in membership of the group of participants to define the new group of participants; and displaying the advertising content in a user interface (UI) for the group conversation.

There may also be provided an electronic device comprising a processor, memory, and a display, the memory comprising computer executable instructions for causing the processor to operate the electronic device by: providing profile data to a messaging server; receiving, from the messaging server, advertising content to be displayed in a group conversation comprising a group of participants, the advertising content having been determined based on information common to all members in a new group of participants using profiles associated with each member in a new group of participants, and after detecting a change in membership of the group of participants to define the new group of participants; and displaying the advertising content in a user interface (UI) for the group conversation.

### BRIEF DESCRIPTION OF THE DRAWINGS

Embodiments will now be described by way of example only with reference to the appended drawings wherein:

FIG. 1 is a block diagram of an example of a wireless communication system.

FIG. 2 is a block diagram of an example of a wireless communication system including a peer-to-peer (P2P) system.

FIG. 3 is a block diagram of an example of a communication of a multi-cast P2P message via the P2P system of FIG. 2.

FIG. 4 is a block diagram illustrating an example of a P2P message.

FIG. 5 is a block diagram illustrating an example of a configuration for a mobile device including a profile module.

FIG. 6 is a block diagram illustrating an example of a configuration for a messaging server including a profile analyzer.

FIG. 7 is a flow diagram illustrating an example of a delivery of advertising content according to common information in profile data for participants in an electronic group conversation after detecting an addition of a new participant.

FIG. 8 is a flow diagram illustrating an example of a delivery of advertising content according to common information in profile data for participants in an electronic group conversation after detecting a removal of a participant.

FIG. 9 is a screen shot of an example of an IM conversation user interface (UI) including an ad.

FIG. 10 is a screen shot of an example of an IM conversation UI including an ad.

FIG. 11 is a flow chart illustrating an example of a set of computer executable operations that may be performed by a messaging server in delivering advertising content to participants of an electronic group conversation.

FIG. 12 is a flow chart illustrating an example of a set of computer executable operations that may be performed by an advertising server in delivering requested advertising content to a messaging server.

FIG. 13 is a flow chart illustrating an example of a set of computer executable operations that may be performed by an electronic device in providing profile data and displaying advertising content in an electronic group conversation.

FIG. 14 is a block diagram of an example of a configuration for a mobile device.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practised without these specific details. In other instances, well-known methods, procedures and components have not been described in detail so as not to obscure the example embodiments described herein. Also, the description is not to be considered as limiting the scope of the example embodiments described herein.

It has been found that in addition to providing relevant and targeted advertising content, users can benefit from advertising that stimulates a conversation, in particular a conversation amongst a group of participants. When advertising content is chosen to be directed to something common to the participants, such advertising content is more likely to be gain the attention of the user and potentially lead to further interactions such as click-throughs.

The following describes a system and method that detects changes in membership of an electronic group of contacts in a messaging application and uses the change in membership of the electronic group to stimulate or redirect the conversation using tailored advertising content. This may be done by determining information common to all members in the new group of contacts using profiles associated with each member in the new group, and using the common information to find relevant advertising content. Additionally, data mining and statistical methods can be used to determine the propensity or likelihood that the conversation participants will do something such as interact with advertising content or initiate a discussion thereabout.

By determining common information at the time that the composition or membership of the group changes, the advertising content, which is deemed relevant, can be delivered at a time that is more likely to capture the attention of the participants since the conversation often begins taking a new direction or is otherwise related to the change in composition of the group.

Although the principles discussed below are applicable to any electronic communication device, examples will be provided for a mobile communication device, which is one of many types of electronic communication devices.

For clarity in the discussion below, mobile communication devices may be commonly referred to as "mobile devices" for brevity. Examples of applicable mobile devices may include, without limitation, cellular phones, smart-phones, wireless organizers, pagers, personal digital assistants, laptops, handheld or other wireless communication devices, wirelessly enabled notebook computers, portable gaming devices, tablet computers, or any other portable electronic device with processing and communication capabilities.

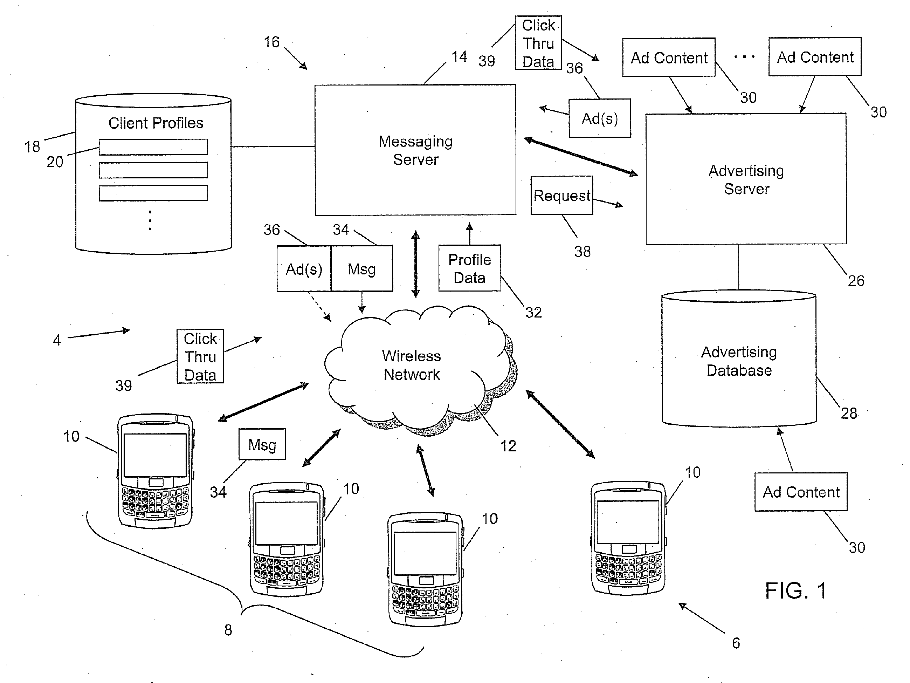

Turning to FIG. 1, an example of a communication system 4 is shown. The communication system 4, in this example, enables, at least in part, mobile devices 10 to communicate with each other via a wireless network 12. For example, data may be exchanged between various mobile devices 10. Data that is sent from one mobile device 10 to another mobile device 10 may be transmitted according to a particular messaging or communication medium, protocol, or other mechanism. For example, as shown in FIG. 1, a message 34 may be sent over the wireless network 12 via a component of a network infrastructure 16. It can be appreciated that the network infrastructure 16 shown in FIG. 1 is illustrative only. In this example, the network infrastructure 16 includes a messaging server 14 for enabling mobile devices 10 to exchange messages 34 with each other.

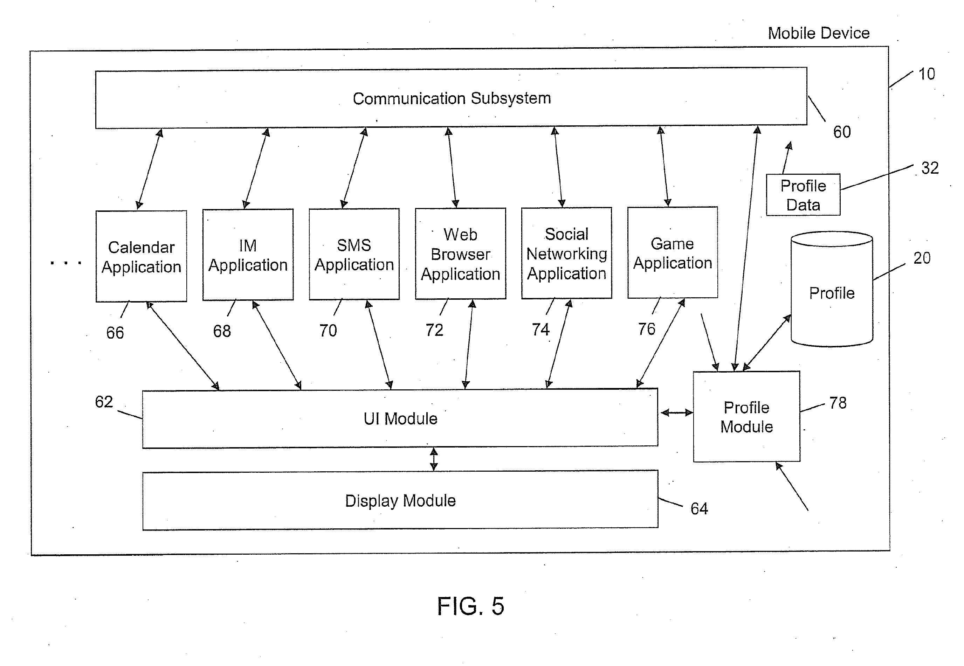

In the example shown in FIG. 1, a group 8 of mobile devices 10 exchanges messages 34 in an electronic group conversation or chat. Also shown in FIG. 1 is a new group member 6 or conversation participant that may join the electronic group conversation taking place amongst the mobile devices 10 in the group 8. Such a group conversation may be hosted or otherwise facilitated by the messaging server 14. The mobile devices 10 may also provide profile data 32, which can include any portion of a client profile 20 (see FIG. 5) associated with a user of the respective mobile device 10. It can be appreciated that the profile data 32 may include an entire profile 20, or select portions of the profile 20, e.g., only new information or events added to the profile 20 since a previous update or other milestone. The messaging server 14 may store client profiles 20 for the mobile devices 10 in a profiles database 18 using the profile data 32 provided by the respective mobile devices 10. Using the profile data 32, and based on the composition of particular electronic groups communicating via the messaging server 14, the messaging server 14 can generate requests 38 for advertising content (referred to in short as an ad or ads) from, in this example, an advertising server 26.

The advertising server 26 can obtain advertising content 30 and store such advertising content 30 in an advertising database 28. The advertising server 26 may also obtain advertising content 30 that has been provided directly to the advertising database 28, e.g., by third parties. The advertising database 28 may be integral with the advertising server 26 or may be provided by a third party. It can also be appreciated that the advertising server 26 and advertising database 28 may also be integral with the messaging server 14 or other entity related to the messaging server 14. As such, the configuration shown in FIG. 1 is for illustrative purposes only. The advertising server 26 in this example obtains one or more ads 36 from the advertising database 28 in accordance with the requests 38 received from the messaging server 14.

The ads 36 are provided by the messaging server 14 to the mobile devices 10 participating in the group conversation in association with a UI for the group conversation. For example, as shown in FIG. 1, the ads 36 may be provided with or within a message 34 sent using the protocol used by the messaging server 14. The ads 36 may also be sent separately and processed by the mobile device 10 to be displayed with the UI for the group conversation. In some examples, selection of, or other interactions with, the ads 36 may be tracked and click-through (thru also for brevity) data 39 generated on the mobile device 10. The click-through data 39 may be sent to the messaging server 14 to track the interactions and thus potential interest in the advertising content 30 associated with the ads 36, and the click-through data 39 may also be provided to the advertising server 26, e.g., to enable advertising content providers to receive remuneration from advertisers (not shown).

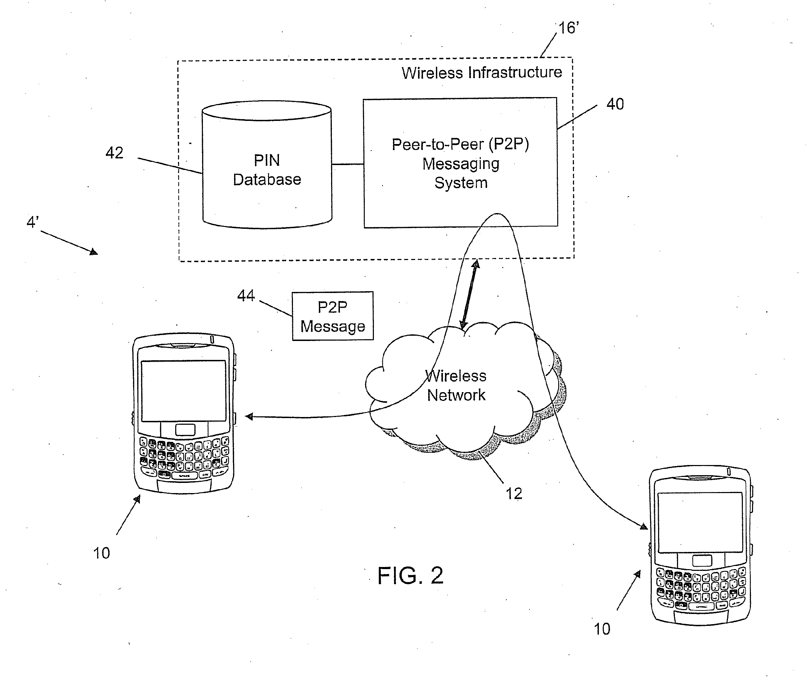

An example of a communication system 4' including a wireless infrastructure 16', is shown in FIG. 2. The communication system 4' at least in part, enables mobile devices 10 to communicate via a P2P messaging system 40 over the wireless network 12. It will be appreciated that the mobile devices 10 shown in FIG. 2 are for illustrative purposes only and many other mobile devices 10 (not shown) may also be capable of communicating with or within the communication system 4'. It will also be appreciated that although the examples shown herein are directed to mobile communication devices, the same principles may apply to other devices capable of communicating with the P2P system 40. For example, an application (not shown) hosted by a desktop computer or other "non-portable" or "non-mobile" device may also be capable of communicating with other devices (e.g. including mobile devices 10) using the P2P system 40.

The P2P system 40 is, in this example, a component of the wireless infrastructure 16' associated with the wireless network 12. The wireless infrastructure 16' in this example includes, in addition to the P2P system 40, and among other things not shown for simplicity, a personal identification number (PIN) database 42. The PIN database 42 in this example embodiment is used to store one or more PINs associated with respective mobile devices 10, whether they are subscribers to a service provided by the wireless infrastructure 16' or otherwise.

A first mobile device 10 may communicate with a second mobile device 10 and vice versa via the P2P system 40, in order to perform P2P messaging or to otherwise exchange P2P-based communications. For ease of explanation, in the following examples, any P2P-based communication may also be referred to as a P2P message 44 as shown in FIG. 2. It can be appreciated that only two mobile devices 10 are shown in FIG. 2 for ease of illustration and, for example, in an electronic group conversation, three or more mobile devices 10 would be participating in the group conversation.

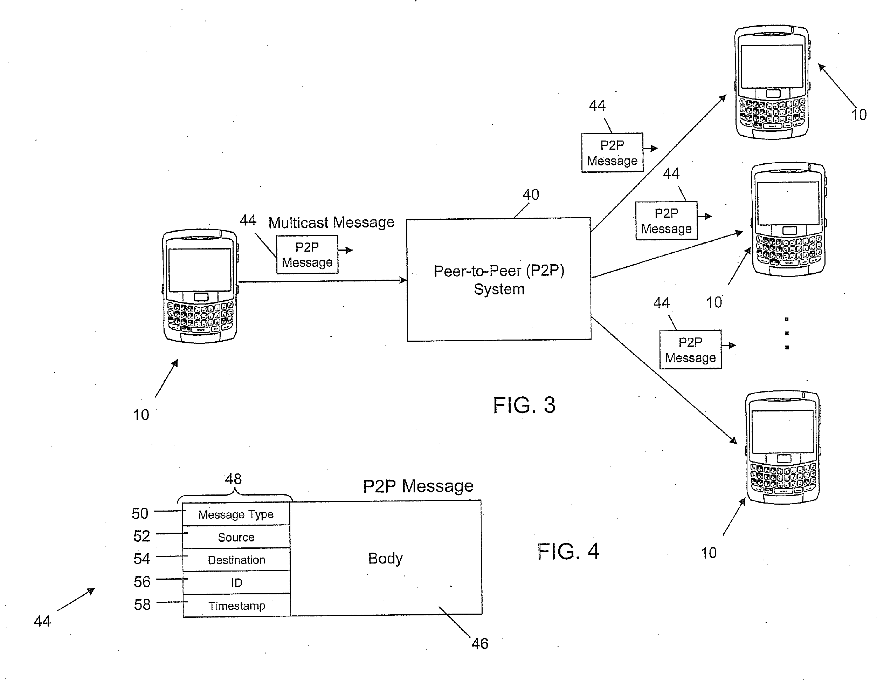

In some example embodiments, the P2P system 40 may be capable of sending multi-cast messages, i.e. forwarding a single message from a sender to multiple recipients without requiring multiple P2P messages 44 to be generated by such sender. For example, as shown in FIG. 3, the P2P system 40 can be operable to enable a single P2P message 44 to be sent to multiple recipients by addressing the P2P message 44 to multiple corresponding P2P addresses, and having the P2P system 40 multicast the message 44 to those recipients.

An example of a P2P message 44 is shown in greater detail in FIG. 4, and has a format that is particularly suitable for a PIN-to-PIN based system. In a typical P2P protocol, each P2P message 44 has associated therewith a source corresponding to the mobile device 10 which has sent the P2P message 44 and includes a destination identifying the one or more intended recipients. Each P2P message 44 in this example includes a body 46, which contains the content for the P2P message 44 (e.g. text or other data), and a header 48, which contains various fields used for transmitting and processing each P2P message 44. In this example, the header 48 includes a message type field 50 to specify the type of transmission (e.g. chat, registration, block, presence, etc.), a source field 52 to specify the device address for the sender, a destination field 54 to specify the device address(es) for the one or more intended recipients, an ID field 56 to identify the corresponding P2P application (e.g., see IM application 68 in FIG. 5) and a timestamp field 58 to indicate the time (and if desired, the date) at which the P2P message 44 was sent by the designated sender.

It can be appreciated that in this example, the ID field 56 can be used to specify the application ID to identify a P2P application on the mobile device 10. Where the P2P application relates to, for example, an IM system 40', the message type field 50 can also be used to designate an IM communication, and the ID field 56 would then correspond to a conversation ID, i.e. a conversation thread the message 44 corresponds to (e.g. such that each message 44 is identified by the conversation in which it was sent).

It will be appreciated that other information or attributes may be included in the P2P message 44, such as a subject field (not shown) to enable a subject for part or all of a conversation (in an IM example) to be transported with the P2P message 44 (e.g. to create new subjects, modify subjects, notify others of subjects, etc.), or application details field (not shown) to provide application-specific information such as the version and capabilities of the application.

The P2P system 40 can utilize any suitable P2P protocol operated by, for example, a P2P router (not shown), which may be part of the wireless infrastructure 16'. It can be appreciated however that a stand-alone P2P configuration (i.e. that does not rely on the wireless infrastructure 16' - not shown) may equally apply the principles herein. The P2P system 40 may also enable mobile devices 10 to communicate with desktop computers thus facilitating, for example, communications such as instant messaging (IM) between mobile applications and desktop applications on the desktop computer.

The P2P system 40 can be implemented using a router-based communication infrastructure, such as one that provides email, SMS, voice, Internet and other communications. Particularly suitable for hosting a P2P messaging router, is a wireless router or server used in systems such as those that provide push-based communication services. In FIG. 2, the wireless infrastructure 16' facilitates P2P communications such as instant messaging between mobile devices 10. P2P messaging, such as IMing, is provided by an associated application stored on each mobile device 10, e.g. an IM application 68 as shown in FIG. 5, which can be initiated, for example, by highlighting and selecting an icon from a display as is well known in the art. The P2P system 40 routes messages between the mobile devices 10 according to the P2P protocol being used. For example, the P2P protocol may define a particular way in which to conduct IM or other types of messaging.

In general, in a P2P protocol, the sender of the P2P message 44 knows the source address of the intended recipient, e.g. a PIN. This may be established when the two devices request to add each other to their respective contact or buddy lists. A particular mobile device 10 can communicate directly with various other mobile devices 10 through the P2P system 40 without requiring a dedicated server for facilitating communications. In other words, the P2P system 40 enables the mobile devices 10 to communicate with each other directly over the wireless infrastructure 16' in accordance with the P2P protocol.

When conducting a P2P session according to the example shown in FIG. 2, the mobile devices 10 can communicate directly with the wireless infrastructure 16' in a client based exchange where, as noted above, an intermediate server is not required. A P2P message 44 sent by one mobile device 10 is received by the wireless infrastructure 16', which obtains the source address for the intended recipient (or recipients) from information associated with the message 44 (e.g. a data log) or from the message 44 itself. Upon obtaining the recipient's address according to the P2P protocol, the wireless infrastructure 16' then routes the message 44 to the recipient associated with the mobile device 10 having such address (or recipients having respective addresses). The wireless infrastructure 16' typically also provides a delivery confirmation to the original sender, which may or may not be displayed to the user. The destination device can also provide such delivery information. The wireless infrastructure 16' may be capable of routing P2P messages 44 reliably as well as being capable of holding onto the P2P messages 44 until they are successfully delivered. Alternatively, if delivery cannot be made after a certain timeout period, the wireless infrastructure 16' may provide a response indicating a failed delivery. The wireless infrastructure 16' may choose to expire a message 44 if a certain waiting period lapses.

Turning now to FIG. 5, an example of a configuration for a mobile device 10 is shown. In this example, a communication subsystem 60 is provided in order to enable the mobile device 10 to access communication networks such as the wireless network 12 shown in FIGS. 1 and 2. Various applications are illustrated in FIG. 5, and such applications may be operable on the mobile device 10 to access the communication subsystem 60 in order to participate in sending and/or receiving of data, such as in a data communication or message 34. It can be appreciated that the series of applications shown in FIG. 5 are for illustrative purposes only and should not be considered exhaustive. The applications shown in FIG. 5 include a calendar application 66, an IM application 68, an SMS application 70, a web browser application 72, a social networking application 74, and a game application 76. The applications 66-76 may also access a UI module 62 for providing UI data on a display of the mobile device 10 using a display module 64.

A profile module 78 is also provided, which may be used to update a profile 20 stored on the mobile device 10. The profile 20 may relate to one or more specific applications (e.g., comprise an IM profile), or may be a generic profile 20 associated with a user of the mobile device 10 in connection with a plurality of applications. As such, it can be appreciated that the profile 20 shown in FIG. 5 may represent one profile 20 or a plurality of different profiles 20. The profile module 78 in this example is used to provide profile data 32 to the messaging server 14. By having all participants in a group conversation provide such profile data 32, the messaging server 14 can determine information and propensities common to the participants, for requesting suitable ads to be displayed in a UI for the group conversation. The profile module 78 may also be used to render the ads 36 in such a UI through UI module 62. It can be appreciated that if, for example, the ads 36 are provided with or within a message 34, the ads 36 would be incorporated into an associated UI by the corresponding application.

The profile module 78 can update the profile(s) 20 and generate profile data 32 in various ways, based on various sources. For example, the profile module 78 can detect events or information in or associated with the applications 66-76, or information or events that are detectable on the mobile device 10 such as themes that have been selected, media content stored or played on the mobile device 10, wallpaper content, etc. The profile module 78 may also accept input directly from a user, for example, via a dialog or prompt displayed for the user. The profile module 78 may also track activities associated with the applications 66-76, e.g., to determine what the user is currently browsing using the web browser application 72; an article the user is currently reading (via the web browser application 72 or a custom application (not shown)); the progress or status of a game being played; updates, postings, or other events associated with a social networking site, etc. The profile module 78 can be programmed or otherwise operable to intelligently select appropriate profile data 32 or may select all information and events that satisfy certain criteria, and have the messaging server 14 determine the relevance of the profile data 32. The profile data 32 may therefore include any event, update, or related information that provides context regarding the activities, status, state, location, environment, etc., of a user associated with the mobile device 10 and thus the group conversation.

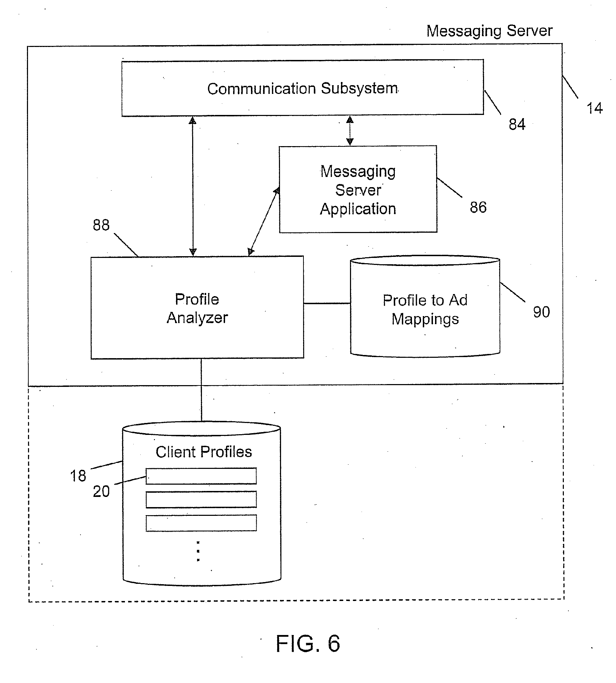

Turning to FIG. 6, an example of a messaging server 14 is shown. The messaging server 14 in this example comprises a communication subsystem 84 for communicating with, among other things, mobile devices 10 that wish to communicate via the messaging server 14. The messaging server 14 also includes a messaging server application 86, which is operable to enable corresponding messaging client applications (e.g., IM application 68) to communicate with each other via the messaging server 14. The messaging server 14 also includes, in this example, a profile analyzer 88, which is used to analyze profiles 20 stored in the profiles database 18, and profile data 32 received from various mobile devices 10. As illustrated using the dashed lines in FIG. 6, it can be appreciated that the profiles database 18 can be include in or integrated with the messaging server 14 or be located at and accessible from a remote location (e.g., cloud computing environment, other network component, etc.). The profile analyzer 88 may also be operable to incorporate data derived through data mining and statistical methods to show a propensity or likelihood that one or more of the participants in the group conversation will do something. Such data can be incorporated in the profiles 20 stored in the profiles database 18 or be included in a separate database (not shown). The profile analyzer 88 may also have or otherwise have access to a profile to ad mappings database 90, which may be used to determine portions of profiles 20 (including propensities and likelihoods if available), and profile data 32, that if common amongst the participants in the group conversation, can be used to determine suitable advertising content 30 to stimulate the group conversation. As discussed above, the profile analyzer 88 can be used to dynamically determine such common information as the composition of the group changes, e.g., to stimulate new conversation topics based on commonalities found when a new participant is added, removed, gone idle, etc.

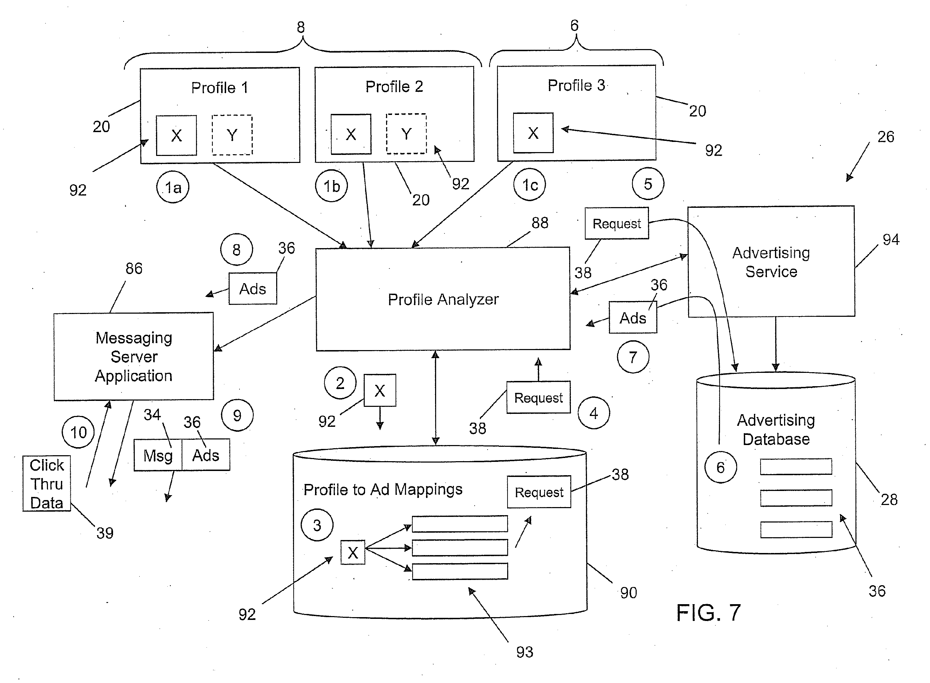

FIG. 7 illustrates an example scenario wherein a new participant 6 joins a group of participants 8 in a group conversation, which initiates a determination of common information for providing relevant ads 36 to stimulate further exchanges in the group conversation. In this example, the messaging server 14 detects that an existing group conversation having two participants 8 changes in composition through the addition of a new participant 6 to the group conversation. The detection of such a change in composition of the group 8 provides an opportunity to stimulate or otherwise enhance the current group conversation by finding one or more commonalities or propensities that are strengthened by the addition of the new participant 6. For example, demographic attributes of the new participant 6 may change an overall profile of the group to find commonalities in professional topics rather than personal topics, e.g., based on age, occupation, income, etc.

In stage 1, the profiles 20 of the participants 6, 8 are used by the profile analyzer 88 to determine common information 92, information "X" in this example, which can be used to tailor advertising in the group conversation to stimulate the discussion. It can be appreciated that the profiles 20 stored in the profiles database 18 may be continually updated with profile data 32 from the mobile devices 10 and rely on the most up to date profile 20 in analyzing the profiles 20 for common information 92. In other examples, the profile analyzer 88 may request profile data 32 to be sent on demand, e.g., to request the current activities of the user of the respective mobile devices 10. Both stored profiles 20 and "on-demand" profile data 32 can also be used depending on the nature of the group 8 and the group conversation. For example, the profile analyzer 88 can be operable to detect, from the conversation text, that the participants are discussing current news and request profile data 32 from the new participant 6 that includes recently viewed news articles from a web browser application 72 or custom news application (not shown). In another example, the common information 92 may indicate a general common interest that can be further refined by discovering recent updates and activities on the respective mobile devices 10, such as calendar events, recent time zones, etc.

The common information 92 may also contain one or more types of information about the user of the mobile devices 10. For example, the common information 92 may represent a common set of demographic specifications such as age, income, interests, occupation, family status, etc. By having the same set of specifications for each profile 20, an average or common profile can be generated that represents the average or representative participant based on the addition of the new participant 6.

The profile analyzer 88 determines the common information 92 (X) and in stage 2 in this example, uses the common information 92 to determine suitable advertising topics or categories 93 by applying profile to ad mappings in stage 3. It can be appreciated that the use of the profile to ad mappings database 90 may be optional, for example, if the common information 92 is directly relevant to the advertising content 30 deemed suitable for the new composition of the group. The profile to ad mappings database 90 may be periodically updated by an advertising service 94 at the advertising server 26 such that the profile analyzer 88 is aware of what advertisements 36 are available. It can be appreciated that the profile to ad mappings database 90 may also be implemented in other ways and thus what is shown in FIG. 7 is for illustrative purposes only. For example, the profile to ad mappings may be implemented using a table internal to the profile analyzer 88, the profile to ad mappings in the database 90 may be performed by the advertising service 94 based on the common information 92, etc. The common information 92, whether further processed or otherwise according to a profile to ad mapping, is used to generate a request 38 in stage 4, and the request 38 is provided in stage 5 to the advertising server 94.

The advertising service 94, in this example, uses the request 38 to determine corresponding or otherwise relevant ads 36 from the advertising database 28 in stage 6. In the example shown in FIG. 7, three advertisements are located. It can be appreciated that, as discussed above, the advertising service 94 can be instructed in the request 38 as to which ads 36 to choose, or may perform some or all of the intelligence in choosing which ads 36 are relevant. For example, the advertising service 94 may receive a series of ad categories in the request 38 and use various psycho-demographic algorithms to determine a suitable ad 36 to stimulate the group conversation. As discussed above, the profile analyzer 88 may also rely on data mining and statistical methods to show a propensity or likelihood to interact with particular ads 36. The ads 36 determined according to the request 38 are provided to the profile analyzer 88 in stage 7, and the profile analyzer 88, in this example, provides the ads 36 in stage 8 to the messaging server application 86. It can be appreciated that the advertising service 94 may also provide the ads 36 directly to the messaging server application 86, e.g., using the same protocol used by the messaging server application 86.

The messaging server application 86, in this example, appends or otherwise includes the ads 36 with a message 34 in stage 9 and sends the message 34 containing the ads 36 to the group participants 6, 8. The ads 36 may be transported in various ways. For example, in a P2P example, the ad 36 may be added to the body 46 of a P2P message 44 and the message type field 50 populated to indicate that the P2P message 44 is an advertisement and thus should be processed accordingly.

The example shown in FIG. 7 also shows click-through data 39 being received in stage 10, indicating that one or more of the mobile devices 10 has detected an interaction with at least one of the ads 36. The click-through data 39 may be processed by the messaging server 14 and/or may be forwarded to the advertising server 26 (not shown).

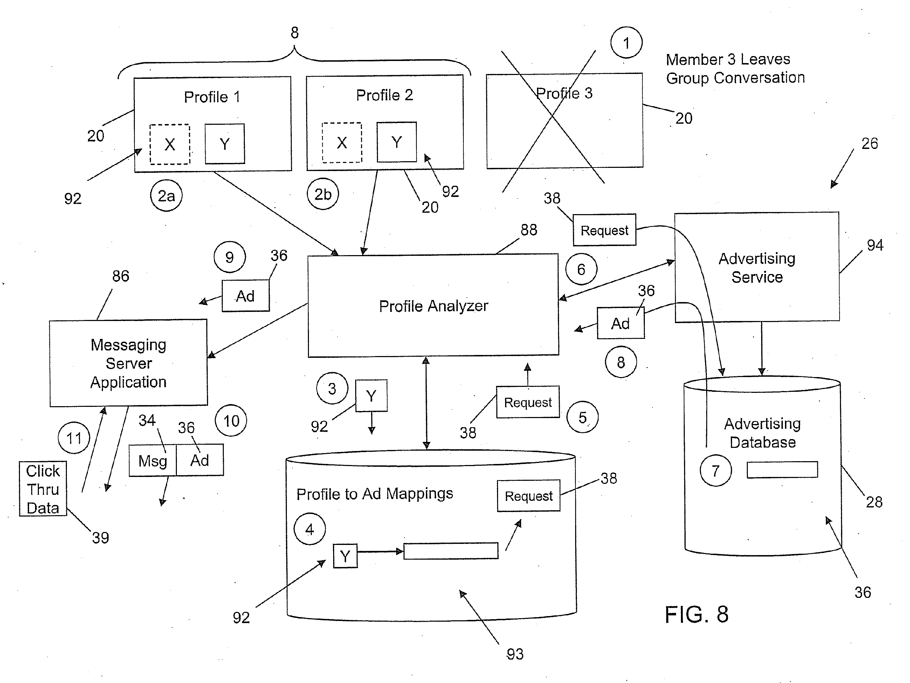

Turning now to FIG. 8, an example is shown wherein the composition of the group of participants 8 changes due to the removal of a participant, e.g., Member 3 as shown in FIG. 8. As discussed above, the removal of a group conversation participant may also affect what advertising content 30 is suitable to stimulate the conversation, e.g., due to a commonality between the remaining members that would not be present or as strong with the presence of the member that has just left the group conversation. For example, if Members 1 and 2 are co-workers and Member 3 is a mutual friend, the common information 92 when all three members are participating in the group conversation may be related to a general interest, whereas the common information 92 most relevant to only Members 1 and 2 may be something related to their employer, occupation, workplace, etc. In this example, new or otherwise different common information 92 (Y) is used to determine the appropriate ad(s) 36 to stimulate the group conversation.

In the example shown in FIG. 8, Member 3 leaves the group conversation in stage 1, and the profiles 20 used in stage 2 correspond only to the remaining group conversation participants, namely Members 1 and 2. The profile analyzer 88 determines common information 92 (Y) based on the profiles 20 in stage 3 and uses the common information 92 to determine suitable advertising topics or categories 93 by applying profile to ad mappings in stage 4. The request 38 generated in stage 5 is then provided to the advertising service 94 in stage 6. In this example, the advertising service 94 determines in stage 7 that one ad 36 is appropriate according to the request 38, and provides the ad 36 in stage 8 to the profile analyzer 88. The profile analyzer 88 provides the ad 36 to the messaging server application 86 in stage 9 and the messaging server application 86 includes the ad 36 in a message 34 and sends the message 34 including the ad 36 to the mobile devices 10 associated with the group participants in stage 10. The example shown in FIG. 8 also illustrates the receipt of click-through data 39 in stage 11, indicating on or more interactions with the ad 36.

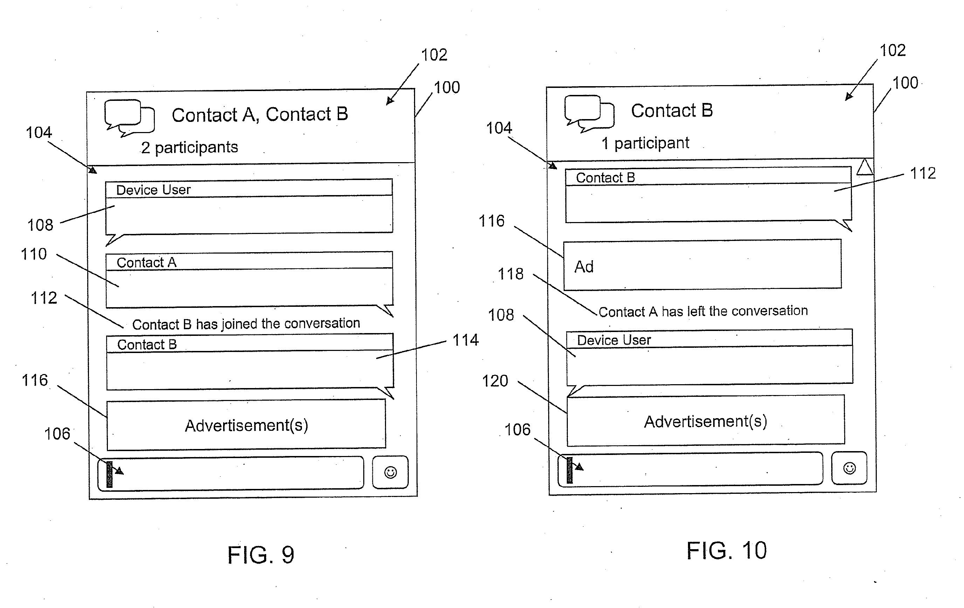

FIG. 9 illustrates an example of an IM group conversation UI 100, which includes a banner portion 102, a conversation history portion 104, and a message composition portion 106. The banner portion 102 in this example includes an indication of the contacts with which the mobile device user is conversing, and may include, as shown, an indication of the number of participants in addition to the mobile device user. The conversation history portion 104 includes, in this example, an outgoing message 108 to the group from the device user, a first incoming message 110 from Contact A, a first status message 112 indicating that Contact B has joined the group conversation, and a second incoming message 114 from Contact B subsequent thereto. Also shown in FIG. 9 is a first ad message 116, which may contain, or be otherwise rendered by the IM application 68, from an ad 36 received from the messaging server 14 based on the common information 92 determined in connection to the addition of the profile 20 of Contact B.

FIG. 10 illustrates an example of the IM group conversation UI 100 at a subsequent point in time in relation to what is shown in FIG. 9. It can be seen in FIG. 10 that subsequent to displaying the first ad message 116, a second status message 118 is displayed indicating that Contact A has left the conversation. A further outgoing message 108 from the device user is also shown. It can be appreciated that this (and other messages ― not shown) may be triggered by inclusion of the first ad message 116 based on the composition of the group at that time. Subsequent to the further outgoing message 108 in this example is a second ad message 120, which may contain, or be otherwise rendered by the IM application 68 from, an ad 36 received from the messaging server 34, based on the common information 92 determined in connection to the removal of the profile 20 of Contact A in analyzing the profiles 20 of the group conversation participants.

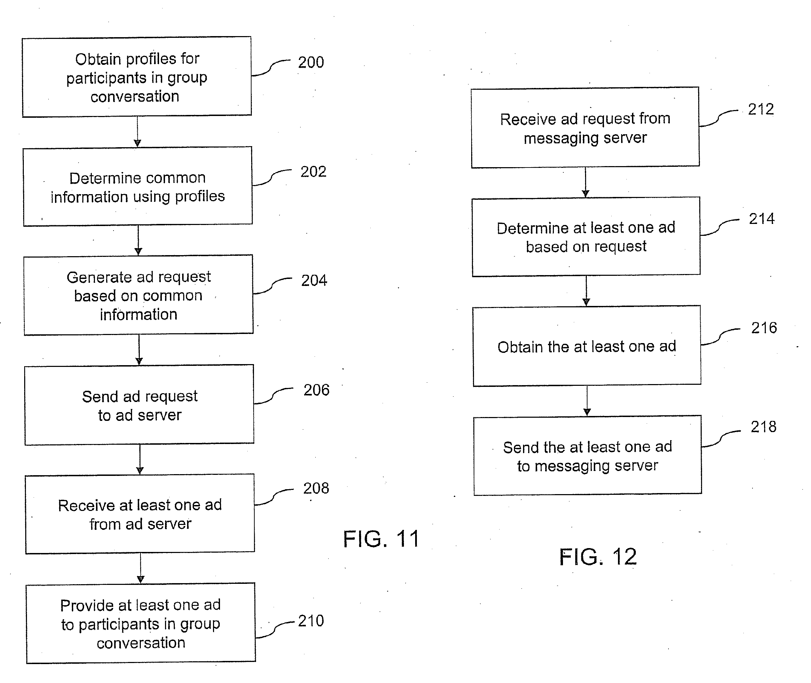

FIG. 11 illustrates an example set of computer executable operations that may be performed by the messaging server 14 in determining one or more ads 36 to be provided to participants in a group conversation. At 200, the profile analyzer 88 obtains profiles 20 for the participants in the group conversation and determines common information 92 using the profiles 20 at 202. It can be appreciated that, as discussed above, the common information 92 can be determined from existing profiles 20, new profile data 32, or both. An ad request 38 is generated at 204 based on the common information 92, e.g., using the profile to ad mapping database 90. The profile analyzer 88 sends the ad request 38 to the advertising server 26 at 206, and the messaging server 14 receives at least one ad 36 from the advertising server 26 (e.g., via the advertising service 94) at 208. The profile analyzer 88 or the messaging server application 86, having received the at least one ad 36, provides the at least one ad 36 to the participants in the group conversation at 210. Although not shown in FIG. 11, it can be appreciated that click-through data 39 may be received if one or more of the participants interacts with, e.g., an ad message 114, 120 displayed in an IM group conversation UI 100.

FIG. 12 illustrates an example set of computer executable operations that may be performed by the advertising server 26 in obtaining one or more ads 36 to be provided to the messaging server 14 in response to a request 38. At 212, the advertising service 94 receives an ad request 38 from the messaging server 14, and determines at 214 at least one ad 36 to be provided based on the request 38. It can be appreciated that, as discussed above, the request 38 may include instructions indicating specific ads 36 or may provide more general information which is to be processed to determine which ads 36 should be provided. At least one ad 36 is obtained at 216, and the at least one ad sent to the messaging server 14 at 218.

It can be appreciated that the advertising server 26 may be part of a wider advertising system that, for example, relies on an arbitrage ecosystem, wherein a request for a type of ad 36 is placed on a market and can be filled by a brokered marketplace. As such, the determinations made by the profile analyzer 88 enable a potentially highly valuable advertising request into the marketplace from which a click-through could generate more revenue for a requestor and a higher likelihood of conversion for the ad provider. The ad selection may depend on both inventory available from the marketplace and the details in the request 38.

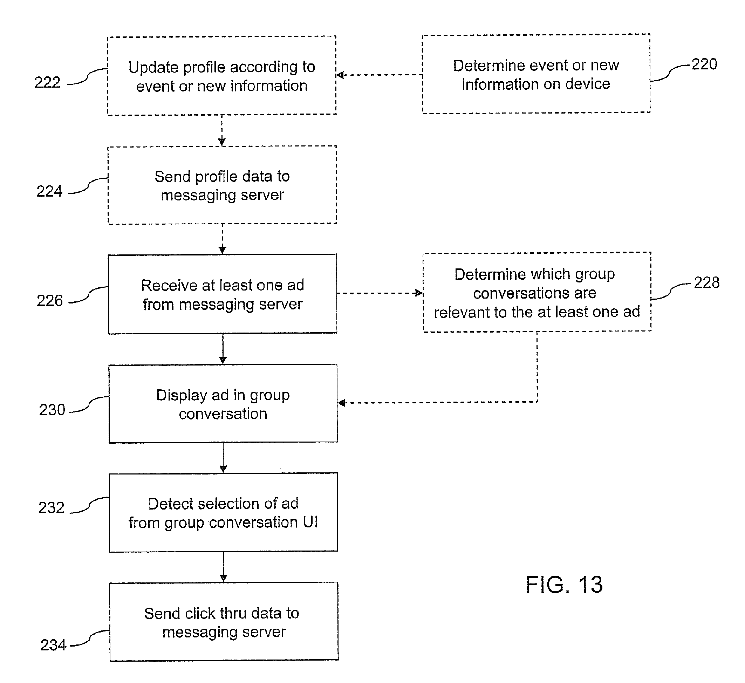

FIG. 13 illustrates an example set of computer executable operations that may be performed by the mobile device 10 in receiving and displaying one or more ads 36 provided by the messaging server 14. At 224, the profile module 78 sends profile data 32 to the messaging server 14. As discussed above, this can be done periodically or in response to a request for such profile data 32, e.g., an on-demand request for current activities, etc. Prior to sending the profile data 32, a new event or new information that is detectable on the mobile device 10 may be determined by the profile module 78 at 220, and the client profile 20 updated at 222 according to the new event or new information. This can be done to provide new information or events to include in a profile update or other provision of profile data 32 at 224. It can be appreciated that operation 224 may not be required in order to receive at least one ad 36 from the messaging server 14 at 226. For example, ads 36 may be delivered between profile data 32 updates or based on an existing profile 20. As such, ads 36 can be provided by the messaging server 14 independent of profile data 20 provided to the messaging server 14. In this way, ads 36 can be provided on a continual basis without requiring fresh information, and profile data 32 from a sub-set of the participants can be used to determine an appropriate ad 36, even when other participants are not currently reporting new profile data 32.

After receiving at least one new ad 36 from the messaging server 14 at 226, the ad 36 may be displayed in the group conversation at 230, e.g., by displaying an ad message 114, 120 in an IM group conversation UI 100. In some examples, a user may be participating in multiple group conversations. In such examples, an ad 36 provided by the messaging server 14 may be relevant to more than one group conversation, and the profile module 78 may determine at 228 which group conversations are relevant to the at least one ad 36 received at 226. The content of the ad 36 that is displayed by the client messaging application (e.g., IM application 68) can be programmed or otherwise operable to enable an interaction therewith, e.g., a click-through. At 232, the profile module 78 detects selection of the ad 36 from the group conversation UI (e.g., selection of the ad message 114, 120 from the IM group conversation UI 100), and sends click-through data 39 to the messaging server 14 at 234.

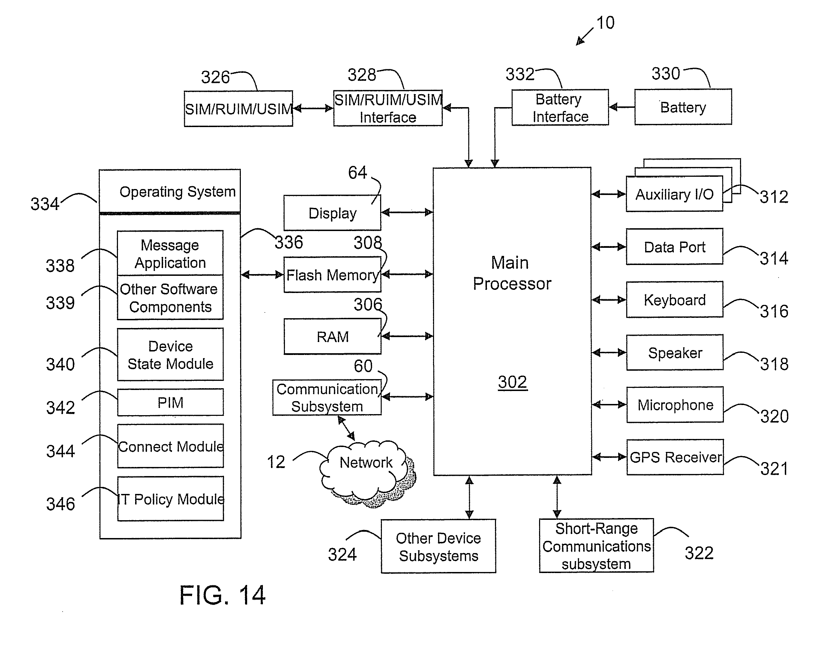

Referring now to FIG. 14, shown therein is a block diagram of an example of a mobile device 10. The mobile device 10 includes a number of components such as a main processor 302 that controls the overall operation of the mobile device 10. Communication functions, including data and voice communications, are performed through a communication subsystem 60. The communication subsystem 60 receives messages from and sends messages to a wireless network 12. In this example of the mobile device 10, the communication subsystem 60 is configured in accordance with the Global System for Mobile Communication (GSM) and General Packet Radio Services (GPRS) standards. The GSM/GPRS wireless network is used worldwide and it is expected that these standards will be superseded eventually by 3G and 4G networks such as EDGE, UMTS and HSDPA, LTE, Wi-Max etc. New standards are still being defined, but it is believed that they will have similarities to the network behavior described herein, and it will also be understood by persons skilled in the art that the examples described herein are intended to use any other suitable standards that are developed in the future. The wireless link connecting the communication subsystem 60 with the wireless network 12 represents one or more different Radio Frequency (RF) channels, operating according to defined protocols specified for GSM/GPRS communications. With newer network protocols, these channels are capable of supporting both circuit switched voice communications and packet switched data communications.

The main processor 302 also interacts with additional subsystems such as a Random Access Memory (RAM) 306, a flash memory 308, a display 64, an auxiliary input/output (I/O) subsystem 312, a data port 314, a keyboard 316, a speaker 318, a microphone 320, GPS receiver 321, short-range communications subsystem 322 and other device subsystems 324.

Some of the subsystems of the mobile device 10 perform communication-related functions, whereas other subsystems may provide "resident" or on-device functions. By way of example, the display 310 and the keyboard 316 may be used for both communication-related functions, such as entering a text message for transmission over the network 12, and device-resident functions such as a calculator or task list.

The mobile device 10 can send and receive communication signals over the wireless network 12 after required network registration or activation procedures have been completed. Network access is associated with a subscriber or user of the mobile device 10. To identify a subscriber, the mobile device 10 may use a subscriber module. Examples of such subscriber modules include a Subscriber Identity Module (SIM) developed for GSM networks, a Removable User identity Module (RUIM) developed for CDMA networks and a Universal Subscriber identity Module (USIM) developed for 3G networks such as UMTS. In the example shown, a SIM/RUIM/USIM 326 is to be inserted into a SIM/RUIM/USIM interface 328 in order to communicate with a network. The SIM/RUIM/USIM component 326 is one type of a conventional "smart card" that can be used to identify a subscriber of the mobile device 10 and to personalize the mobile device 10, among other things. Without the SIM/RUIM/USIM component 326, the mobile device 10 may not be fully operational for communication with the wireless network 12. By inserting the SIM/RUIM/USIM 326 into the SIM/RUIM/USIM interface 328, a subscriber can access all subscribed services. Services may include: web browsing and messaging such as e-mail, voice mail, SMS, and MMS. More advanced services may include: point of sale, field service and sales force automation. The SIM/RUIM/USIM 326 includes a processor and memory for storing information. Once the SIM/RUIM/USIM 326 is inserted into the SIM/RUIM/USIM interface 328, it is coupled to the main processor 302. In order to identify the subscriber, the SIM/RUIM/USIM 326 can include some user parameters such as an International Mobile Subscriber identity (IMSI). An advantage of using the SIM/RUIM/USIM 326 is that a subscriber is not necessarily bound by any single physical mobile device. The SIM/RUIM/USIM 326 may store additional subscriber information for a mobile device as well, including datebook (or calendar) information and recent call information. Alternatively, user identification information can also be programmed into the flash memory 308.

The mobile device 10 is typically a battery-powered device and includes a battery interface 332 for receiving one or more batteries 330 (typically rechargeable). In at least some examples, the battery 330 can be a smart battery with an embedded microprocessor. The battery interface 332 is coupled to a regulator (not shown), which assists the battery 330 in providing power V+ to the mobile device 10. Although current technology makes use of a battery, future technologies such as micro fuel cells may provide the power to the mobile device 10.

The mobile device 10 also includes an operating system 334 and software components 336 to 346 which are described in more detail below. The operating system 334 and the software components 336 to 346 that are executed by the main processor 302 are typically stored in a persistent store such as the flash memory 308, which may alternatively be a read-only memory (ROM) or similar storage element (not shown). Those skilled in the art will appreciate that portions of the operating system 334 and the software components 336 to 346, such as specific device applications, or parts thereof, may be temporarily loaded into a volatile store such as the RAM 306. Other software components can also be included, as is well known to those skilled in the art.

The subset of software applications 336 that control basic device operations, including data and voice communication applications, may be installed on the mobile device 10 during its manufacture. Other software applications include a message application 338 that can be any suitable software program that allows a user of the mobile device 10 to send and receive electronic messages. Various alternatives exist for the message application 338 as is well known to those skilled in the art. Messages that have been sent or received by the user are typically stored in the flash memory 308 of the mobile device 10 or some other suitable storage element in the mobile device 10. In at least some examples, some of the sent and received messages may be stored remotely from the mobile device 10 such as in a data store of an associated host system that the mobile device 10 communicates with.

The software applications can further include a device state module 340, a Personal Information Manager (PIM) 342, and other suitable modules (not shown). The device state module 340 provides persistence, i.e. the device state module 340 ensures that important device data is stored in persistent memory, such as the flash memory 308, so that the data is not lost when the mobile device 10 is turned off or loses power.

The PIM 342 includes functionality for organizing and managing data items of interest to the user, such as, but not limited to, e-mail, contacts, calendar events, voice mails, appointments, and task items. A PIM application has the ability to send and receive data items via the wireless network 12. PIM data items may be seamlessly integrated, synchronized, and updated via the wireless network 12 with the mobile device subscriber's corresponding data items stored and/or associated with a host computer system. This functionality creates a mirrored host computer on the mobile device 10 with respect to such items. This can be particularly advantageous when the host computer system is the mobile device subscriber's office computer system.

The mobile device 10 may also comprise a connect module 344, and an IT policy module 346. The connect module 344 implements the communication protocols that are required for the mobile device 10 to communicate with the wireless infrastructure and any host system, such as an enterprise system, that the mobile device 10 is authorized to interface with.

The connect module 344 includes a set of APIs that can be integrated with the mobile device 10 to allow the mobile device 10 to use any number of services associated with the enterprise system. The connect module 344 allows the mobile device 10 to establish an end-to-end secure, authenticated communication pipe with a host system (not shown). A subset of applications for which access is provided by the connect module 344 can be used to pass IT policy commands from the host system to the mobile device 10. This can be done in a wireless or wired manner. These instructions can then be passed to the IT policy module 346 to modify the configuration of the device 10. Alternatively, in some cases, the IT policy update can also be done over a wired connection.

The IT policy module 346 receives IT policy data that encodes the IT policy. The IT policy module 346 then ensures that the IT policy data is authenticated by the mobile device 10. The IT policy data can then be stored in the flash memory 308 in its native form. After the IT policy data is stored, a global notification can be sent by the IT policy module 346 to all of the applications residing on the mobile device 10. Applications for which the IT policy may be applicable then respond by reading the IT policy data to look for IT policy rules that are applicable.

Other types of software applications or components 339 can also be installed on the mobile device 10. These software applications 339 can be pre-installed applications (i.e. other than message application 338) or third party applications, which are added after the manufacture of the mobile device 10. Examples of third party applications include games, calculators, utilities, etc.

The additional applications 339 can be loaded onto the mobile device 10 through at least one of the wireless network 12, the auxiliary I/O subsystem 312, the data port 314, the short-range communications subsystem 322, or any other suitable device subsystem 324. This flexibility in application installation increases the functionality of the mobile device 10 and may provide enhanced on-device functions, communication-related functions, or both. For example, secure communication applications may enable electronic commerce functions and other such financial transactions to be performed using the mobile device 10.

The data port 314 enables a subscriber to set preferences through an external device or software application and extends the capabilities of the mobile device 10 by providing for information or software downloads to the mobile device 10 other than through a wireless communication network. The alternate download path may, for example, be used to load an encryption key onto the mobile device 10 through a direct and thus reliable and trusted connection to provide secure device communication.

The data port 314 can be any suitable port that enables data communication between the mobile device 10 and another computing device. The data port 314 can be a serial or a parallel port. In some instances, the data port 314 can be a Universal Serial Bus (USB) port that includes data lines for data transfer and a supply line that can provide a charging current to charge the battery 330 of the mobile device 10.

The short-range communications subsystem 322 provides for communication between the mobile device 10 and different systems or devices, without the use of the wireless network 12. For example, the subsystem 322 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download may be processed by the communication subsystem 60 and input to the main processor 302. The main processor 302 may then process the received signal for output to the display 310 or alternatively to the auxiliary I/O subsystem 312. A subscriber may also compose data items, such as e-mail messages, for example, using the keyboard 316 in conjunction with the display 310 and possibly the auxiliary I/O subsystem 312. The auxiliary I/O subsystem 312 may include devices such as: a touch screen, mouse, track ball, track pad, optical navigation module, infrared fingerprint detector, or a roller wheel with dynamic button pressing capability. The keyboard 316 is an alphanumeric keyboard and/or telephone-type keypad. However, other types of keyboards may also be used, such as a virtual or "soft" keyboard rendered as images on a touch screen. A composed item may be transmitted over the wireless network 12 through the communication subsystem 60.

For voice communications, the overall operation of the mobile device 10 in this example is substantially similar, except that the received signals are output to the speaker 318, and signals for transmission are generated by the microphone 320. Alternative voice or audio I/O subsystems, such as a voice message recording subsystem, can also be implemented on the mobile device 10. Although voice or audio signal output is accomplished primarily through the speaker 318, the display 310 can also be used to provide additional information such as the identity of a calling party, duration of a voice call, or other voice call related information.

It will be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, any component of or related to the communication system 4, etc., or accessible or connectable thereto. Any application or module herein described may be implemented using computer readable/executable instructions that may be stored or otherwise held by such computer readable media.

It will be appreciated that the example embodiments and corresponding diagrams used herein are for illustrative purposes only. Different configurations and terminology can be used without departing from the principles expressed herein. For instance, components and modules can be added, deleted, modified, or arranged with differing connections without departing from these principles.

The steps or operations in the flow charts and diagrams described herein are just for example. There may be many variations to these steps or operations without departing from the spirit of the invention or inventions. For instance, the steps may be performed in a differing order, or steps may be added, deleted, or modified.

Although the above principles have been described with reference to certain specific example embodiments, various modifications thereof will be apparent to those skilled in the art as outlined in the appended claims.

## Claims

1. A method comprising:
detecting a change in membership of a group of participants in a group conversation in a messaging application to define a new group of participants;
determining information common to all members in the new group of participants using profiles associated with each member in the new group of participants;
determining advertising content associated with the information; and
providing the advertising content to the new group of participants.

2. The method of claim 1, wherein the change in membership comprises an addition of a new member, and the information common to all members relates to an event associated with the new member and, optionally, wherein the event comprises an activity taking place on a mobile device associated with the new member and, optionally, wherein the activity comprises web browsing.

3. The method of claim 1 or claim 2, wherein the change in membership comprises a removal of an existing member, and the information common to all members of the new group of participants comprises information that was not common prior to the change in membership of the group of participants.

4. The method of any one of claims 1 to 3, wherein the advertising content is provided to respective messaging applications for display as an advertisement in the group conversation.

5. The method of claim 4, wherein the advertisement is displayed using a message placed in the group conversation.

6. The method of any one of claims 1 to 5, further comprising determining a likelihood that one or more of the group of participants will interact with the advertising content.

7. A method of operating a mobile device, the method comprising
providing profile data to a messaging server;
receiving, from the messaging server, advertising content to be displayed in a group conversation comprising a group of participants, the advertising content having been determined based on information common to all members in a new group of participants using profiles associated with each member in a new group of participants, and after detecting a change in membership of the group of participants to define the new group of participants; and
displaying the advertising content in a user interface (UI) for the group conversation.

8. The method of claim 7, wherein the change in membership comprises an addition of a new member, and the information common to all members relates to an event associated with the new member and, optionally, wherein the event comprises an activity taking place on a mobile device associated with the new member and, optionally, wherein the activity comprises web browsing.

9. The method of claim 7 or claim 8, wherein the change in membership comprises a removal of an existing member, and the information common to all members of the new group of participants comprises information that was not common prior to the change in membership of the group of participants.

10. The method of any one of claims 7 to 9, wherein the advertising content is displayed using an advertisement displayed in a message in the UI.

11. The method of any one of claims 7 to 10, wherein the profile data comprises information or events detected on the mobile device.

12. The method of any one of claims 7 to 11, wherein the profile data is provided periodically or in response to a request for new profile data received from the messaging server.

13. A computer readable storage medium comprising computer executable instructions that when executed by a processor cause the processor to perform the method according to any one of claims 1 to 12.

14. A messaging server comprising a processor and memory, the memory comprising computer executable instructions that when executed by the processor, cause the processor to perform the method according to any one of claims 1 to 6.

15. An electronic device comprising a processor, memory, and a display, the memory comprising computer executable instructions that when executed by the processor cause
the processor to perform the method according to any one of claims 7 to 12.
